# EUROPEAN PATENT APPLICATION

(11) **EP 4 518 218 A1**
(43) Date of publication of application: **05.03.2025**
(21) Application number: 22939155.2
(22) Date of filing: 28.04.2022
(51) Int. Cl.: H04L 5/00, H04W 72/12

(54) **DATA TRANSCEIVING METHOD AND APPARATUS**

(71) Applicant: FUJITSU LIMITED, Kawasaki-shi, Kanagawa 211-8588 (JP)
(72) Inventor: JIANG, Qinyan, Beijing 100022 (CN); ZHANG, Jian, Beijing 100022 (CN); ZHANG, Lei, Beijing 100022 (CN)
(74) Representative: Haseltine Lake Kempner LLP
(86) International application number: PCT/CN2022/090098
(87) International publication number: WO 2023/206305

(57) **Abstract**

Embodiments of this disclosure provide a data transceiving method and apparatus. The data transceiving apparatus includes: a first receiving unit configured to receive downlink control information (DCI) in a first cell, the DCI being used to schedule PDSCH(s) and/or PUSCH(s) on at least two cells in the first cell and/or at least one second cell; and a transceiving unit configured to receive the PDSCH(s) and/or transmit the PUSCH(s) on the at least two cells.

## Description

### Technical Field

This disclosure relates to the field of communication technologies.

### Background

A physical downlink shared channel (PDSCH) is a type of physical downlink channel in a wireless communication system, and is used to carry downlink data. A physical uplink shared channel (PUSCH) is a type of physical uplink channel in a wireless communication system, and is used to carry uplink data. The PDSCH and PUSCH can be scheduled by downlink control information (DCI). In a current new radio (NR) system, multiple DCI formats for scheduling PDSCHs or PUSCHs are defined, and specific information and/or sizes included in DCI of different DCI formats are different, so as to meet different scheduling demands.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

Currently, radio resource control configures a carrier (cell) to perform self-scheduling or cross-carrier scheduling. Self-scheduling is that PDSCHs and/or PUSCHs on a carrier are scheduled by DCI transmitted on the carrier; and cross-carrier is that PDSCHs and/or PUSCHs on a carrier are scheduled by DCI transmitted on another carrier (cell).

At present, DCI only supports scheduling one serving cell (once), including cases of self-scheduling and cross-carrier scheduling. In order to alleviate DCI monitoring burden on a terminal equipment and reduce power consumption and complexity, the NR system supports scheduling PDSCHs and/or PUSCHs of multiple serving cells by one DCI. However, there is currently no specific solution on how to support scheduling PDSCHs and/or PUSCHs of multiple serving cells by one DCI (such as how to indicate/determine one or more serving cells scheduled by one DCI, etc.).

In order to solve at least one of the above problems, embodiments of this disclosure provide a data transceiving method and apparatus.

According to one aspect of the embodiments of this disclosure, there is provided a data transceiving apparatus, applicable to a terminal equipment, the apparatus including:
a first receiving unit configured to receive downlink control information (DCI) in a first cell, the DCI being used to schedule PDSCH(s) and/or PUSCH(s) on at least two cells in the first cell and/or at least one second cell; and
a transceiving unit configured to receive the PDSCH(s) and/or transmit the PUSCH(s) on the at least two cells.

According to another aspect of the embodiments of this disclosure, there is provided a data transceiving apparatus, applicable to a network device, the apparatus including:
a first transmitting unit configured to transmit downlink control information (DCI) in a first cell, the DCI being used to schedule PDSCH(s) and/or PUSCH(s) on at least two cells in the first cell and/or at least one second cell; and
a second transceiving unit configured to transmit the PDSCH(s) and/or receive the PUSCH(s) on the at least two cells.

According to a further aspect of the embodiments of this disclosure, there is provided a communication system, including a terminal equipment and a network device, the terminal equipment including the data transceiving apparatus as described in the one aspect, and the network device including the data transceiving apparatus as described in the other aspect.

An advantage of the embodiments of this disclosure exists in that scheduling PDSCHs and/or PUSCHs of multiple serving cells by one DCI may be supported, thereby alleviating DCI monitoring burden on a terminal equipment, and reducing power consumption and complexity.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of a communication system of embodiments of this disclosure;
FIG. 2 is a schematic diagram of a data transceiving method of embodiments of this disclosure;
FIGs. 3A and 3B are schematic diagrams of bundling cells of the embodiments of this disclosure;
FIGs. 4A-4C are schematic diagrams of DCI information fields of the embodiments of this disclosure;
FIG. 5 is a schematic diagram of a data transceiving method of embodiments of this disclosure;
FIG. 6 is a schematic diagram of a data transceiving apparatus of embodiments of this disclosure;
FIG. 7 is a schematic diagram of a data transceiving apparatus of embodiments of this disclosure;
FIG. 8 is a schematic diagram of a network device of embodiments of this disclosure; and
FIG. 9 is a schematic diagram of a terminal equipment of embodiments of this disclosure.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of' or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipment described above. "A device" may refer to a network device, and may also refer to a terminal equipment, except otherwise specified.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable. The terms "cell", "carrier", "serving cell", "carrier component" and "serving carrier" are interchangeable. The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable. The terms "DCI" and "DCI format" are interchangeable.

In addition, transmitting or receiving a PUSCH may be understood as transmitting or receiving uplink data carried by the PUSCH, transmitting or receiving a PUCCH may be understood as transmitting or receiving uplink information (e.g. UCI) carried by the PUCCH, transmitting or receiving a PRACH may be understood as transmitting or receiving a preamble carried by the PRACH. Transmitting or receiving a PDSCH may be understood as transmitting or receiving downlink data carried by the PDSCH, and transmitting or receiving a PDCCH may be understood as transmitting or receiving downlink information carried by the PDCCH.

In the embodiments of this disclosure, higher-layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

In the embodiments of this disclosure, "multiple" refers to at least two, or two or more than two.

In the embodiments of this disclosure, "predefined" refers to specified in a protocol or determined according to a rule specified in a protocol, without needing additional configuration. The configuration refers to directly or indirectly indicating by a network device via higher-layer signaling and/or physical layer signaling. The physical layer signaling refers to, for example, control information (DCI) carried by a physical control channel or control information carried by a sequence; however, it is not limited thereto.

Scenarios in the embodiments of this disclosure shall be described below by way of examples; however, this disclosure is not limited thereto.

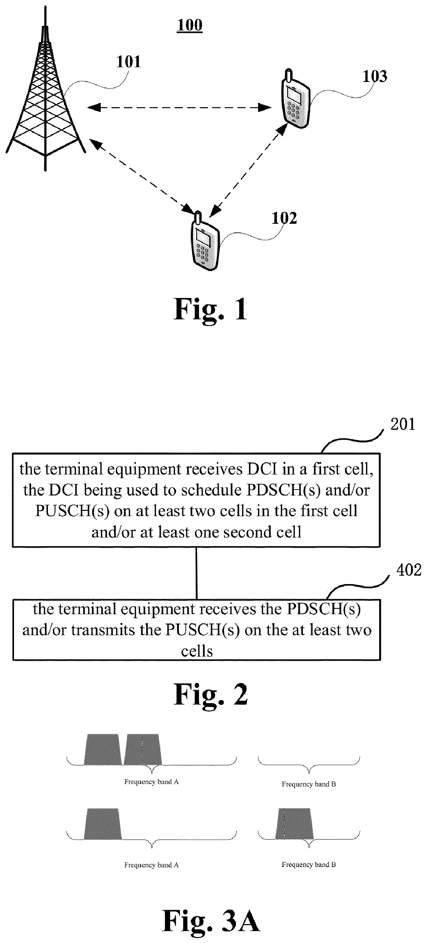

FIG. 1 is a schematic diagram of a communication system of embodiments of this disclosure, in which a case where terminal equipments and a network device are taken as examples is schematically shown. As shown in FIG. 1, a communication system 100 may include a network device 101 and terminal equipment 102, 103. For the sake of simplicity, an example having only two terminal equipment and one network device is schematically given in FIG. 1; however, the embodiments of this disclosure is not limited thereto.

In the embodiments of this disclosure, existing services or services that may be implemented in the future may be performed between the network device 101 and the terminal equipment 102, 103. For example, such services may include but not limited to an enhanced mobile broadband (eMBB), massive machine type communication (MTC), ultra-reliable and low-latency communication (URLLC), and related communications of reduced capability terminal equipment, etc.

It should be noted that FIG. 1 shows that two terminal equipment 102, 103 are both in coverage of the network device 101. However, this disclosure is not limited thereto, and the two terminal equipment 102, 103 may not be in coverage of the network device 101, or one terminal equipment 102 is in coverage of the network device 101 and the other terminal equipment 103 is out of coverage of the network device 101.

At present, cross-carrier scheduling is configured by an RRC cross-carrier scheduling configuration information element (CrossCarrierSchedulingConfig), which is carried by serving cell configuration (ServingCellConff) of a serving cell, wherein whether the serving cell is cross-carrier scheduled by another serving cell or may be cross-carrier scheduled another serving cell is configured by CrossCarrierSchedulingConfig.

If the serving cell may cross-carrier schedule another serving cell, it is referred to as, for example, a scheduling cell, and if the serving cell is cross-carrier scheduled by another serving cell, the serving cell is referred to as, for example, a scheduled cell. A scheduling cell may carry downlink control information (DCI) used for scheduling a scheduled cell.

At present, the DCI only supports scheduling one serving cell, including cases of self-scheduling and cross-carrier scheduling. Assuming that CrossCarrierSchedulingConfig configures that a cell C is cross-carrier scheduled by a cell A and configures that a value of a carrier indicator field (CIF) to which cell C corresponds is 1, in a case where a value of a CIF in DCI used for scheduling PDSCHs/PUSCHs on cell A is 1, the DCI schedules PDSCHs/PUSCHs on cell C.

In order to alleviate a DCI monitoring burden on a terminal equipment and reduce power consumption and complexity, an NR system supports scheduling PDSCHs and/or PUSCHs of multiple serving cells by one DCI. However, there is currently no specific solution on how to support scheduling PDSCHs and/or PUSCHs of multiple serving cells by one DCI (such as how to indicate/determine one or more serving cells scheduled by one DCI, etc.).

Following description shall be given with reference to embodiments.

### Embodiments of a first aspect

The embodiments of this disclosure provide a data transceiving method, which shall be described from a terminal equipment side.

FIG. 2 is a schematic diagram of a data transceiving method of the embodiments of this disclosure. As shown in FIG. 2, a method includes:
201: the terminal equipment receives downlink control information (DCI) in a first cell, the DCI being used to schedule PDSCH(s) and/or PUSCH(s) on at least two cells in the first cell and/or at least one second cell; and
202: the terminal equipment receives the PDSCH(s) and/or transmits the PUSCH(s) on the at least two cells.

In some embodiments, the terminal equipment receives the DCI in the first cell, and the first cell may schedule PDSCHs and/or PUSCHs on the first cell and/or the second cells. The first cell may also be referred to as a scheduling cell, and the second cell may also be referred to as a scheduled cell; however, it is not limited thereto. Or, the first cell may also schedule PDSCHs and/or PUSCHs of its own (self-scheduling). The first cell may be a primary cell or a secondary cell, and the second cell may be a primary cell or a secondary cell, and the embodiment of this disclosure is not limited thereto.

In some embodiments, a second cell corresponds to one or more first cells, that is, all of multiple first cells may schedule PDSCHs and/or PUSCHs on the second cell, and at least one second cell to which the multiple first cells respectively correspond includes the second cell.

In some embodiments, a cell is both a first cell and a second cell, that is, the cell may be used to schedule PDSCHs and/or PUSCHs on at least one second cell, and PDSCHs and/or PUSCHs on the cell may also be scheduled by at least one first cell.

In some embodiments, scheduling a first or second cell by the first cell may also be referred to as scheduling PDSCHs and/or PUSCHs on the first or second cell by the first cell, or scheduling a cell by DCI may also be referred to as scheduling PDSCHs and/or PUSCHs on the first or second cell by the DCI, or scheduling PDSCHs and/or PUSCHs on the first or second cell by DCI received on the first cell. The DCI used for scheduling the PDSCHs may also be referred to as downlink (DL) assignment, and the DCI used for scheduling the PUSCHs may also be referred to as an uplink (UL) grant. In some embodiments, the DCI is used to schedule PDSCHs and/or PUSCHs on at least two cells, thereby reducing a DCI listening burden on the terminal equipment and lowering power consumption and complexity. The at least two cells (hereinafter referred to as M cells; where, M is an integer greater than or equal to 2) are M cells in the first cell and/or at least one (N; where, N is an integer greater than or equal to 1) second cell. That is, the M cells may all be M cells in N second cells, or the M cells may be one first cell and M-1 cells in N second cells.

Ranges of the first cell and N second cells shall be described below.

In some embodiments, the first cell and N second cells may include all or part of cells in a primary cell group or a secondary cell group or the same PUCCH group (set 1), or the first cell and at least one second cell may include cells that can (may) be scheduled by the first cell (set 2), or cells that can (may) be scheduled simultaneously by the first cell (set 3), or cells that can (may) be scheduled by the DCI (set 4). The first cell and N second cells may also be referred to as bundled cells, or the at least two cells scheduled by the DCI are referred to as bundled cells; however, it is not limited thereto.

In some embodiments, the first cell and/or at least one second cell may include at least one (P) sub set of cells, and cells in different sub sets of cells are unable to be scheduled by a same DCI (on the first cell). That is, when the same DCI schedules M cells, the M cells belong to the same sub set of cells, or in other words, the M cells do not exist at least two cells distributed in different sub sets of cells.

In some embodiments, the sub set of cells is a subset of set 1 or set 2 or set 3 or set 4; however, the embodiment of this disclosure is not limited thereto. For example, when the first cell and N second cells are set 1, the sub set of cells may be set 2 or set 3 or set 4, or a subset of set 2 or set 3 or set 4, which shall not be enumerated herein any further. In addition, division modes (cell ranges) of sub sets of cells concerned in different scenarios may be identical or different, which shall be described in detail later.

In some embodiments, a sub combination of cells refers to a subset of set 1 or set 2 or set 3 or set 4. For example, cells in set 1 or set 2 or set 3 or set 4 that may be scheduled by the same DCI may be taken as a sub combination of cells. A sub set of cells or sub combination of cells may include one or more cells, different sub sets of cells have intersections or not, different sub combinations of cells have intersections or not, and the sub sets of cells and sub combinations of cells are identical or different.

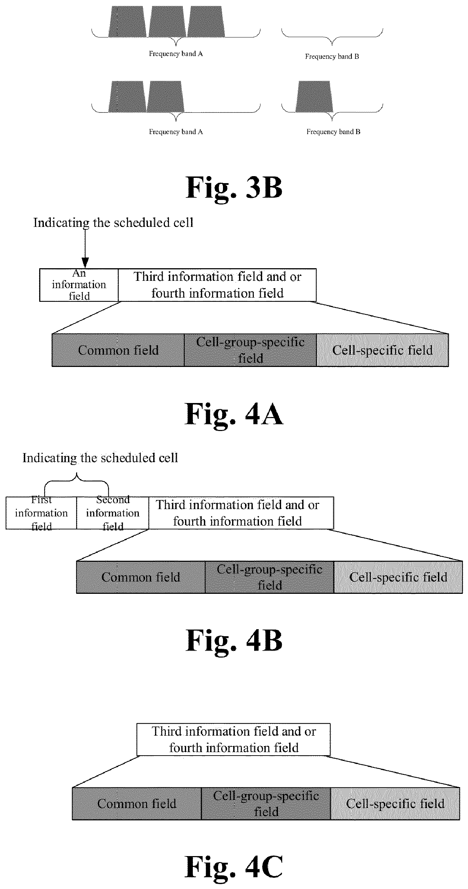

FIGs. 3A and 3B are schematic diagrams of distribution of the first cell and N second cells. As shown in FIGs. 3A and 3B, different cells (carriers) may be in identical frequency ranges (frequency bands), or may be in different frequency ranges (frequency bands).

In some embodiments, the DCI is only used for scheduling two or more cells simultaneously (i.e. once), or the DCI may be used for scheduling two or more cells simultaneously (i.e. once), and may be used for scheduling only one cell once.

In some embodiments, a format of the DCI may be a first DCI format, which may be, for example, a DCI format used to support multi-cell scheduling. Specifically, for example, the first DCI format is DCI format 1_1 and/or 0_1, or DCI format 1_2 and/or 0_2, or DCI formats newly introduced to support multi-cell scheduling (e.g. DCI format 1_3 and/or 0_3), etc. However, the embodiment of this disclosure is not limited thereto. For example, the DCI format that only supports multi-cell scheduling is not distinguished from other DCI formats, and these DCI formats are any DCI formats used for scheduling PDSCHs and/or PUSCHs, which shall not be enumerated herein any further.

In other words, the DCI schedules PDSCHs and/or PUSCHs on M cells, but the DCI may only support multi-cell scheduling, or the DCI may support single-cell scheduling and multi-cell scheduling.

In some embodiments, the M cells scheduled by the DCI may be predefined or configured, or may be dynamically (explicitly or implicitly) indicated by the DCI, such as being dynamically (explicitly or implicitly) indicated by at least one of a first information field, second information field, third information field and fourth information field in the DCI, and the method may further include (not shown):
the terminal equipment receives first configuration information and/or first activation/deactivation information, the first configuration information and/or the first activation/deactivation information including information indicating the first cell and/or the at least one second cell, and/or, information of the at least one sub set of cells, and/or, information of a sub combination of cells that are able to be scheduled by the same DCI in the first cell and/or the at least one second cell.

In some embodiments, the first configuration information is carried by RRC signaling, and may include cell configuration information of the first cell or cross-carrier scheduling configuration information (CrossCarrierSchedulingConfig) in cell configuration information of the first cell, and/or cell configuration information of the second cell or cross-carrier scheduling configuration information (CrossCarrierSchedulingConfig) in cell configuration information of the second cell, and/or configuration information of a primary cell group or a secondary cell group, which shall be illustrated later.

In some embodiments, the first activation/deactivation information may be carried by an MAC CE. The first activation/deactivation information is used to activate and/or deactivate sub sets of cells that are pre-defined and/or configured by the first configuration information and/or sub combinations of cells that may be scheduled by the same DCI.

In some embodiments, for the DCI, the scheduled M cells may be determined according to the first configuration information and/or the first activation/deactivation information, without the need to combine information fields in the DCI. Or, the scheduled M cells may be indicated/determined according to the first configuration information and/or the first activation/deactivation information, in combination with the information fields in the DCI. For example, cells or sub combination of cells corresponding to values of the information fields in the DCI or values of a part of blocks in the information fields may be determined according to the first configuration information and/or the first activation/deactivation information.

The above cases shall be described below respectively.

In some embodiments, the M cells are the first cell and N second cells, that is, the M cells scheduled by the DCI are equivalent to the first cell and N second cells scheduled by the DCI. The first cell and N second cells are predefined or configured (such as RRC signaling and/or MAC signaling). When the DCI is in the first DCI format, the M cells scheduled by the DCI are predefined or configured (such as the first configuration information) first cell and N second cells.

For example, the first configuration information indicates information of the first cell and N second cells (second indication information), and the first configuration information is for the first DCI format. When there are multiple first DCI formats, the first configuration information configures information of the first cell and N second cells respectively for different first DCI formats (such as different for uplink and downlink). For example, the first configuration information includes values of CIFs corresponding to the first cell and N second cells, and optionally, it may also include first DCI format indication information corresponding to the information configuring the first cell and N second cells.

In some embodiments, the M cells are dynamically (explicitly or implicitly) indicated by the DCI. The information fields in the DCI shall be described below with reference to FIGs. 4A-4C.

FIG. 4A is a schematic diagram of a DCI format. As shown in FIG. 4A, an information field (such as a first information field or second information field described later) in the DCI is used to explicitly indicate a cell scheduled by the DCI. The DCI also includes a third information field and/or a fourth information field, which may be common or cell-specific or cell-group-specific information field(s). The third information field and/or fourth information field may be frequency resource allocation field(s) or time-domain resource allocation field(s), etc., which shall not be enumerated herein any further. The third information field and/or fourth information field may implicitly indicate cell(s) scheduled by the DCI, or are not used to indicate cell(s) scheduled by the DCI.

FIG. 4B is a schematic diagram of a DCI format. As shown in FIG. 4B, two or more than two information fields (such as the first information field and second information field described later) in the DCI are used to explicitly indicate the cells scheduled by the DCI. The DCI also includes a third information field and/or a fourth information field, which may be common or cell-specific or cell-group-specific information field(s). The third information field and/or fourth information field may be frequency resource allocation field(s) or time-domain resource allocation field(s), etc., which shall not be enumerated herein any further. The third information field and/or fourth information field may implicitly indicate cell(s) scheduled by the DCI, or are not used to indicate cell(s) scheduled by the DCI.

FIG. 4C is a schematic diagram of a DCI format. As shown in FIG. 4C, the DCI does not include an information field used to explicitly indicate the cells scheduled by the DCI. The DCI also includes a third information field and/or a fourth information field, which may be common or cell-specific or cell-group-specific information field(s). The third information field and/or fourth information field may be frequency resource allocation field(s) or time-domain resource allocation field(s), etc., which shall not be enumerated herein any further. The third information field and/or fourth information field may implicitly indicate cell(s) scheduled by the DCI.

In some embodiments, the first information field may be an existing carrier indication field (CIF) of the DCI (a mode for indication may be modified), and the second information field may be a newly-added information field. However, the embodiment of this disclosure is not limited thereto.

A method for indicating/determining the cells scheduled by the DCI shall be described below with reference to FIGs. 4A-4C.

In some embodiments, as shown in FIG. 4C, the DCI does not include an information field explicitly indicating the scheduled cells. The DCI may or may not include a third information field. When one or more cells to which the third information field corresponds are not scheduled, a value of the third information field is a first value, or the DCI does not include a third information field, or the terminal equipment ignores the third information field. The number of the third information field is at least two, and bit positions of the at least two information fields in the DCI are consecutive or discrete. Each third information field includes one or more consecutive bits, and the terminal equipment may determine the M cells scheduled by the DCI according to the value of the third information field.

For example, the third information field is a cell-specific or cell-group-specific information field, that is, different third information fields correspond to different sub sets of cells or cells, and the third information field indicates via a first value that a corresponding sub set of cells or cell is not scheduled. Or, if a sub set of cells or cell is not scheduled, a corresponding third information field is set to be the first value or no third information field is included. When the value of the third information field is not the first value, it implicitly indicates that a corresponding sub set of cells or cell is scheduled. For example, the third information field is a frequency resource allocation field and is used to explicitly indicate PDSCH and/or PUSCH frequency resources scheduled on a corresponding cell or sub set of cells. There are three third information fields in total, which correspond to sub set 1 of cells, sub set 2 of cells and sub set 3 of cells, respectively. When a value of a first one of the third information fields is the first value or the first one of the third information fields is not included, sub set 1 of cells is not scheduled; when a value of a second one of the third information fields is not the first value (which is a fourth value), sub set 2 of cells is scheduled, the fourth value being used to indicate PDSCH and/or PUSCH frequency resources scheduled on sub set 2 of cells; and when a value of a third one of the information fields is not the first value (which is a fifth value), sub set 3 of cells is scheduled, the fifth value being used to indicate PDSCH and/or PUSCH frequency resources scheduled on sub set 3 of cells.

In some embodiments, the DCI includes a fourth information field, which includes a first block and/or a second block. When one or more cells to which the first block or second block corresponds are not scheduled, a value of the first block or second block is a second value or the fourth information field does not include the first block or second block, or the terminal equipment ignores the first block or second block, and the terminal equipment may determine the M cells scheduled by the DCI according to a value of the fourth information field.

For example, the fourth information field includes a first block and/or a second block, bits included in the second block and the first block may or may not intersect. Different blocks correspond to different sub sets of cells or cells, and the first block and/or the second block indicate(s) via a second value that a corresponding sub set of cells or cell is not scheduled or that a corresponding sub set of cells or cell is not scheduled is indicated by not including the first block and/or the second block. Or, in other words, if a sub set of cells or cell is not scheduled, a corresponding first block and/or second block is/are set to be the second value or the first block and/or the second blocks is/are not included. For example, the fourth information field includes a first block and a second block, which correspond to sub set 1 of cells and sub set 2 of cells, respectively. A value of the first block is the second value or the first block is not included, and sub set 1 of cells is not scheduled. A value of the second block is not the second value or the second block is included, and sub set 2 of cells is scheduled, which shall not be enumerated herein any further.

The cells or sub sets of cells to which the value of the third information field or fourth information field or the values of part of blocks of the fourth information field correspond may be determined above via the first configuration information, and implementations thereof are as described above, which shall not be repeated herein any further.

In some embodiments, the DCI includes a first information field, the first information field being used to explicitly indicate the cells scheduled by DCI. For example, a value of a CIF may correspond to multiple cells. When the first information field of the DCI is the value of the CIF, it indicates scheduling multiple cells to which the value of the CIF corresponds. The downlink allocation or uplink grant of the DCI is for the multiple cells, for example, the first information field may be an existing CIF.

For example, one or more corresponding values of CIFs may be predefined and/or configured for each cell, or one or more cells may be predefined or configured for each value of CIF. Following description shall be given by taking configuring (via the first configuration information) one or more corresponding values of CIFs for each cell as an example, and a mode for predefining one or more corresponding values of CIFs is similar thereto, which shall not be enumerated herein any further.

For example, the first configuration information includes cell configuration information (cross-carrier scheduling configuration information therein) of the first cell and/or the second cell, the cell configuration information of the first cell and/or the second cell including first indication information, the first indication information being used to indicate one or more values of a first information field to which the first cell or the second cell corresponds. The first configuration information is carried by RRC signaling, and the terminal equipment may determine a correspondence between the first cell and/or the second cell and the value of the first information field (a cell or a sub combination of cells to which the value of the first information field corresponds) according to the first configuration information. In other words, which cells in the first cell and/or the second cell to which a value of each first information field corresponds may be known, hence, the M scheduled cells is determined according to the correspondence when the DCI indicates one value of first information field.

The first indication information may indicate one or more values of a first information field in a manner of sequence or bitmap, and the cross-carrier scheduling configuration information of the first cell may be expressed as follows by using an ASN.1 data format (a sequence value):

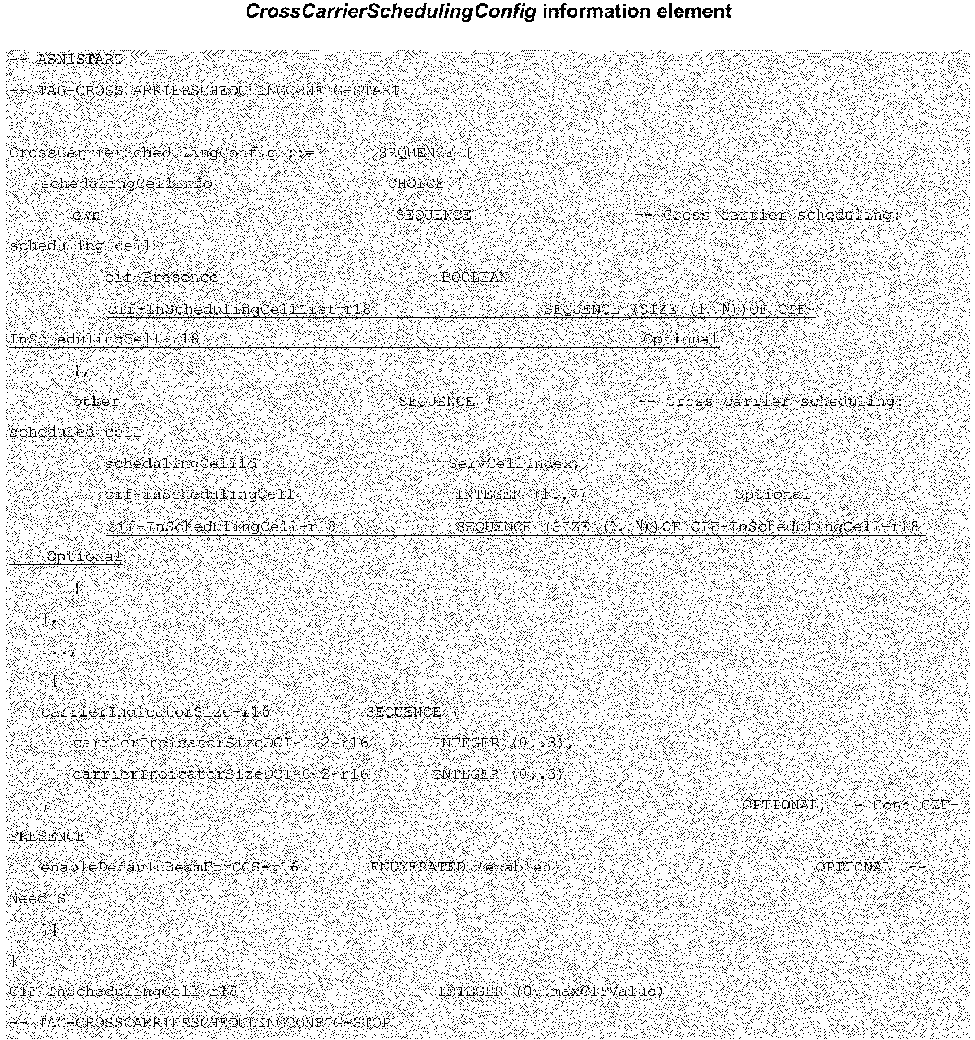

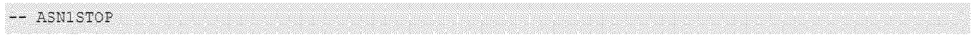

Therefore, the first indication information cif-InSchedulingCellList-r18 is used to indicate one or more values of a first information field to which the first cell or the second cell corresponds. Likewise, the cross-carrier scheduling configuration information of each second cell also includes the first indication information cif-InSchedulingCellList-r18, which is used to indicate one or more values of a first information field to which the first cell or the second cell corresponds. For example, the first cell is cell 1, the second cells include cell 2, cell 3 and cell 4, first indication information indicating CIF values of the cross-carrier scheduling configuration information of cell 1 are 0, 4, 5, 6, 10, 11, 12 and 14, first indication information indicating CIF values of cross-carrier scheduling configuration information of cell 2 are 1, 4, 7, 8, 10, 12, 13 and 14, first indication information indicating CIF values of cross-carrier scheduling configuration information of cell 3 are 2, 5, 7, 9, 10, 11, 13 and 14, and first indication information indicating CIF values of cross-carrier scheduling configuration information of cell 4 are 3, 6, 8, 9, 11, 12, 13 and 14. A correspondence between each CIF value and the cells is as shown in Table 1 below:

**Table 1**

| CIF value | Cell 1 | Cell 2 | Cell 3 | Cell 4 |
|---|---|---|---|---|
| 0 | | | | |
| 1 | | | | |
| 2 | | | | |
| 3 | | | | |
| 4 | √ | | | |
| 5 | | | | |
| 6 | | | | |
| 7 | | √ | | |
| 8 | | | | |
| 9 | | | | |
| 10 | | | √ | |
| 11 | | | | |
| 12 | | | | √ |
| 13 | | | | |
| 14 | | | √ | |

Therefore, when the value of the first information field of the DCI is 9 (e.g. 1001), it indicates scheduling cell 3 and cell 4, and when the first information field value is 14, it indicates scheduling cells 1, 2, 3 and 4.

Table 1 is illustrative only; however, this disclosure is not limited thereto. For example, it may also be as shown in Table 2 or Table 3 below:

**Table 2**

| CIF value | Cell 1 | Cell 2 | Cell 3 | Cell 4 |
|---|---|---|---|---|
| 0 | | | | |
| 1 | | √ | | |
| 2 | | | √ | |
| 3 | | | | √ |
| 4 | √ | √ | | |
| 5 | √ | | √ | |
| 6 | √ | | | √ |
| 7 | | √ | √ | |
| 8 | | √ | | √ |
| 9 | | | √ | √ |
| 10 | √ | √ | √ | |
| 11 | √ | | √ | √ |
| 12 | √ | √ | | √ |
| 13 | | √ | √ | √ |
| 14 | | √ | √ | √ |

**Table 3**

| CIF value | Cell 1 | Cell 2 | Cell 3 | Cell 4 |
|---|---|---|---|---|
| 0 | √ | √ | | |
| 1 | √ | | √ | |
| 2 | √ | | | √ |
| 3 | | | √ | |
| 4 | | √ | | √ |
| 5 | | | √ | |
| 6 | √ | √ | √ | |
| 7 | √ | | √ | √ |
| 8 | | √ | | √ |
| 9 | | √ | √ | √ |
| 10 | √ | | √ | √ |

The cross-carrier scheduling configuration information of the first cell may be expressed as follows by using an ASN.1 data format (a bitmap):

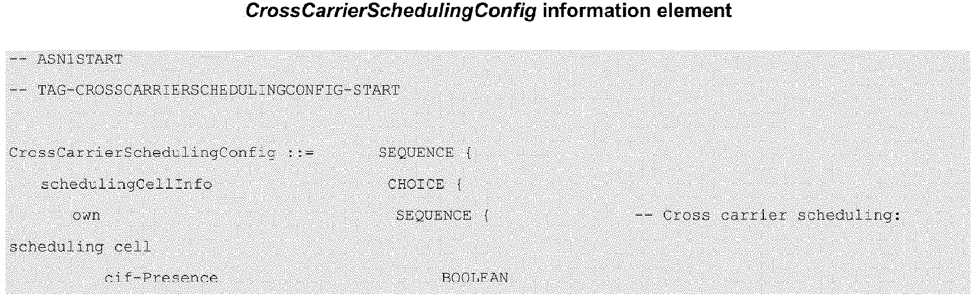

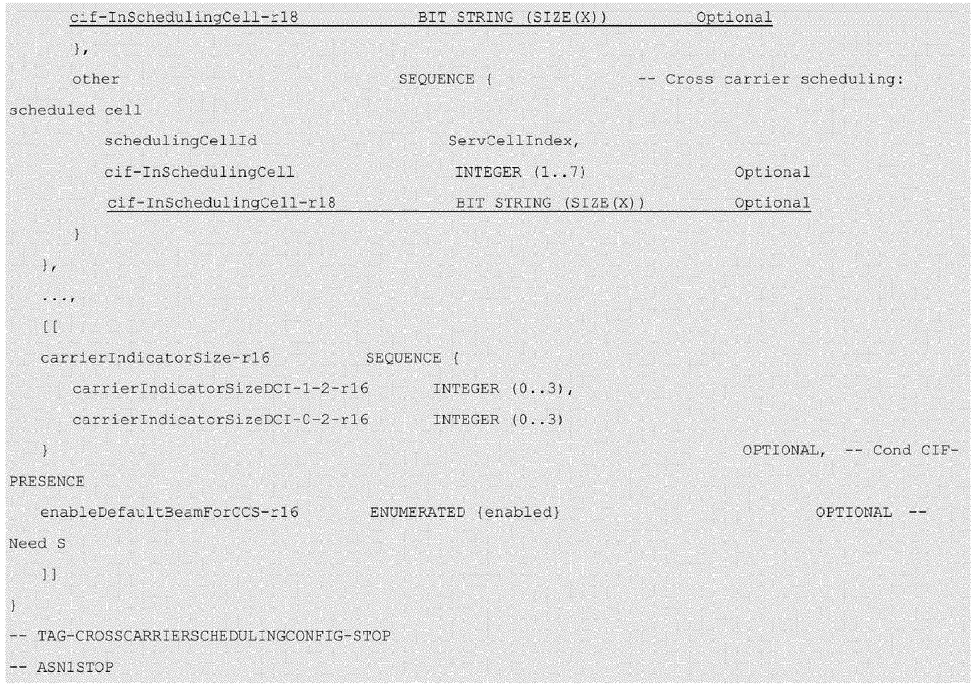

The first indication information cif-InSchedulingCellList-r18 is used to indicate one or more values of a first information field to which the first cell or the second cell corresponds. Likewise, the cross-carrier scheduling configuration information of the second cells also include the first indication information cif-InSchedulingCellList-r18, which is used to indicate one or more values of a first information field to which the first cell or the second cells correspond(s). For example, the first indication information is a bitmap, each bit corresponding to a CIF value. For example, if the first indication information of the cross-carrier scheduling configuration information of cell 1 is 10001110, it indicates that the CIF values are 0, 4, 5, 6. If the first indication information of the cross-carrier scheduling configuration information of cell 2 is 01001001, it indicates the CIF values are 1, 4, 7. If the first indication information of the cross-carrier scheduling configuration information of cell 3 is 00100101, it indicates the CIF values are 2, 5, 7. If the first indication information of the cross-carrier scheduling configuration information of cell 4 is 00010010, it indicates the CIF values are 3, 6. Therefore, when the value of the first information field of the DCI is 0110 (the CIF value is 6), it indicates scheduling cell 1 and cell 4, and when the first information field value is 0111, it indicates scheduling cell 2 and cell 3.

In some embodiments, that the value for the first information field is equal to 0 corresponds only to the first cell, and a range of values of the first information field to which the first cell corresponds includes 0. That is, a range of values of the first information field to which the second cell corresponds does not include 0, that the value of the first information field is 0 is only used for scheduling the first cell separately. When it is needed to schedule the first cell and the second cell simultaneously, the value of the first information field is not 0. However, this is illustrative only, for example, the range of values of the first information field to which the second cells correspond may also include 0.

In existing methods, that the first information field is 0 is unable to be configured in the cross-carrier scheduling configuration information, but is predefined as corresponding to the first cell. In order to support multi-cell scheduling, the range of values of the first information field that may be indicated by the first indication information includes 0 or not.

In some embodiments, ranges of values of the first information field that may be indicated by the first indication information for the first cell and second cell are identical or different, and/or numbers of values of the first information field that may be configured are identical or different. When they different, for example, the range of values of the first information field that may be indicated by the first indication information for the first cell does not include 0 (optionally, is default, and the value of the first information field to which it corresponds includes 0), and the range of values of the first information field that may be indicated by the first indication information for the second cell includes 0. When they are identical, for example, all the ranges of values of the first information field that may be indicated by the first indication information for the first cell and second cell include 0 or do not include 0.

For example, for Table 1, the range of values of the first information field that may be indicated by the first indication information for the second cell does not include 0, and for Table 3, the range of values of the first information field that may be indicated by the first indication information for the second cell includes 0.

In some embodiments, when the range of values of the first information field that may be indicated by the first indication information for the first cell includes 0, if the first indication information is not included, a configured value of the first information field is 0 by default.

In the above example, the first information field is taken as a whole to indicate the M cells scheduled by the DCI. In some embodiments, that the first information field includes a third block and/or a fourth block, and when one or more cells to which the third block or fourth block corresponds are not scheduled, a value of the third block or fourth block is a third value, and the terminal equipment may determine the M cells scheduled by the DCI according to value of each block in the first information field.

For example, the first information field includes the third block and/or the fourth block, bits included in the third block and the fourth block may or may not intersect. Different blocks correspond to different sub sets of cells or cells, and the third block and/or the fourth block indicate(s) via a third value that a corresponding sub set of cells or cell is not scheduled. Or, in other words, if a sub set of cells or cell is not scheduled, a corresponding third block and fourth block is/are set to be a third value. For example, the first information field includes a third block and a fourth block, which correspond to sub set 1 of cells and sub set 2 of cells, respectively. A value of the third block is the third value, and sub set 1 of cells is not scheduled. A value of the fourth block is not the third value, and sub set 2 of cells is scheduled, which shall not be enumerated herein any further.

In the above example, the DCI includes one first information field, indicating the M scheduled cells. In some embodiments, the DCI may include at least two first information fields, different first information fields corresponding to different sub sets of cells or cells. For example, when a cell or sub set of cells to which a first information field corresponds is not scheduled, a value of the first information field is the third value.

For example, the first information field indicates via the third value that a corresponding sub set of cells or cell is not scheduled. Or, if a sub set of cells or cell is not scheduled, a corresponding first information field is set to be the third value. When the value of the first information field is not the third value, it indicates that the corresponding sub set of cells or cell is scheduled.

There may or may not be intersections between the cells or sub sets of cells to which different first information fields or blocks correspond described above. A mode for configuring a correspondence between the first information fields or blocks and the cells or sub sets of cells is similar to that of the first configuration information described above, which shall not be enumerated herein any further. The terminal equipment may determine cells or sub sets of cells to which values of the first information fields or values of a part of blocks of the first information fields correspond according to the first configuration information.

In some embodiments, the above first information field indicates the scheduled cells by indicating the value of the CIF; however, the embodiment of this disclosure is not limited thereto. For example, the scheduled cells may be indicated not based on indicating the value of the CIF, which shall be illustrated below.

In some embodiments, the DCI includes a first information field or a second information field. The first information field or the second information field indicates the scheduled cells in a form of bitmap or RIV, or is used to indicate an index of sub set of cells. The terminal equipment determines the cells scheduled by the DCI according to a value of the first information field or the second information field. Following description shall be given by taking the bitmap as an example, and different bits correspond to different cells or sub sets of cells.

For example, a cell range that may be indicated by the bitmap is the first cell and/or N second cells, that is, cells that may be indicated by the bitmap are cells that may be scheduled by the first cell or cells that may be scheduled by the DCI.

For example, the cell range that may be indicated by the bitmap are cells in a sub set of cells, optionally, except for the first cell or second cells configured with a CIF value. That is, the bitmap indicates cells associated with the cells corresponding to the CIF value in the DCI; however, the embodiment of this disclosure is not limited thereto.

For example, the cell range that may be indicated by the bitmap are cells associated with cells corresponding to the configured or predefined CIF value, optionally, except for the first cell or second cells configured with the CIF value. That is, the bitmap indicates cells associated with cells corresponding to the CIF value in the DCI. What is different from above is that the associated cells are not limited to being within the same cell, and may be across sub sets of cells.

For example, the cell range that may be indicated by the bitmap are cells within one sub set of cells, the sub set of cells also including the first cell, or the cell range that may be indicated by the bitmap are cells that may be scheduled by the first DCI format. What is different from above is that the scheduled cells are not limited to being within the same cell, and the associated cells may be across sub sets of cells.

The method for configuring the correspondence between the first information field or second information field and the cells or sub sets of cells is similar to that of the first configuration information described above. The terminal equipment may determine the cells or sub sets of cells to which the value of the first information field or second information field corresponds according to the first configuration information, which shall not be enumerated herein any further.

In some embodiments, the DCI includes a first information field, the first information field being used to indicate a cell in the cells scheduled by the DCI, which is similar to the related art. In configuring or predefining the values of the first information field, the values of the first information field correspond to the cells one by one, and the above-described first configuration information indicates information of at least one sub set of cells, such as indicating in cell configuration information of a cell that the at least one sub set of cells is at least one sub set of cells associated with the cells. Therefore, when the DCI indicates a value of one first information field, at least one sub set of cells associated with the cell to which the value of the first information field corresponds may be determined according to the first configuration information, and a cell to which the value of the first information field corresponds and cells in at least one sub set of cells associated with the cell are the M cells scheduled by the DCI.

Optionally, when the configured associated sub sets of cells are multiple, the scheduled sub combination of cells may be indicated from one or more sub combinations of cells where the cell is located via activation/deactivation information or the second information field, or the activation/deactivation information or the second information field is/are used to indicate the scheduled sub combination of cells from one or more sub combinations of cells associated with the cell, or used to indicate one or more cells in the cells scheduled by the DCI other than the cell (or to indicate/activate a sub set of cells from multiple sets). For example, the activation/deactivation information is a set index of the activated sub set of cells, and a value of the second information field is a set index of a sub set of cells. In this case, the first cell and N second cells are equivalent to cells in the activated sub set of cells. Details are as shown in Table 4 below (the gray grids represent the cells to which the CIF values correspond, and the striped grids represent the associated cells).

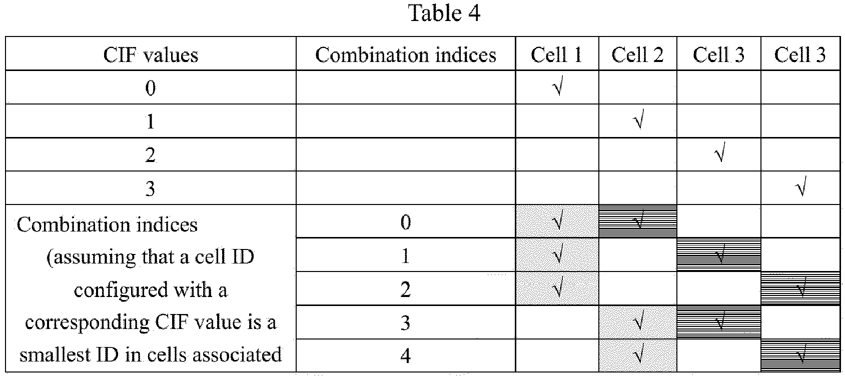

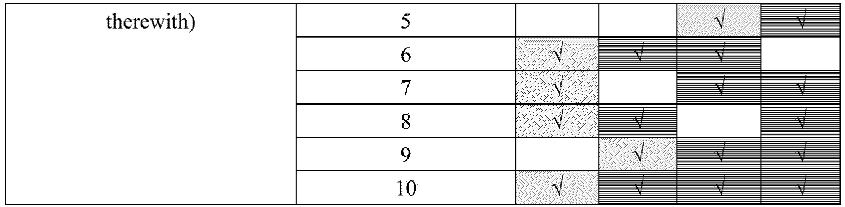

In some embodiments, the DCI includes a first information field and a second information field, the first information field and the second information field jointly indicating the cells scheduled by the DCI. The terminal equipment determines the M cells scheduled by the DCI according to values of the first information field and second information field.

For example, the second information field is used to indicate the index of the sub set of cells, and the first information field is used to indicate the cells scheduled by the DCI in the sub set of cells indicated by the second information field. What is different from above is that the range of scheduled cells indicated by the first information field is cells in sub sets of cells in the first cell and second cell, and reference may be made to the above-described embodiments for a specific mode for indication, which shall not be repeated herein any further.

In some embodiments, the DCI includes a second information field, the second information field indicating the number M of the scheduled cells, and the terminal equipment determines the M cells scheduled by the DCI according to a value of the second information field. For example, multiple scheduling cell patterns may be configured via the first configuration information, wherein numbers of scheduled cells to which the patterns correspond are different, and each pattern indicates which cells are scheduled. Therefore, according to the number of scheduling cells indicated by the second information field, the terminal equipment may determine patterns to which the number corresponds, and determine the M scheduled cells according to the patterns. It should be noted that in determining the cells scheduled by the DCI according to the values of the first information field and/or the second information field, when it is determined that a cell or a sub set of cells is not scheduled, a value of the third information field corresponding to the cell or sub set of cells is the second value, or a corresponding third information field is not included, or the terminal equipment ignores a corresponding third information field, or a value of a first block or second block of a fourth information field corresponding to the cell or sub set of cells is the second value, or a corresponding third information field is not included, or the terminal equipment ignores a corresponding third information field, and reference may be made to the above-described embodiments for specific implementations, which shall not be repeated herein any further.

It can be seen from the above embodiment that scheduling PDSCHs and/or PUSCHs of multiple serving cells by one DCI may be supported, thereby alleviating DCI monitoring burden on the terminal equipment, and reducing power consumption and complexity.

### Embodiments of a second aspect

The embodiments of this disclosure provide a data transceiving method, which shall be described from a network device side, with parts repeated with those in the embodiments of the first aspect being not going to be described herein any further.

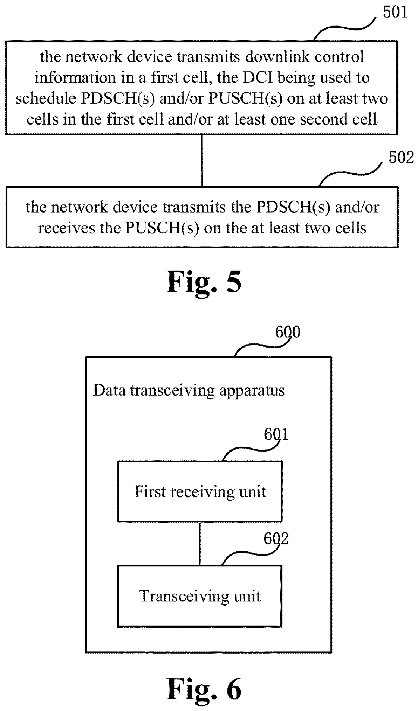

FIG. 5 is a schematic diagram of a data transceiving method of the embodiments of this disclosure. As shown in FIG. 5, a method includes:
501: the network device transmits downlink control information (DCI) in a first cell, the DCI being used to schedule PDSCH(s) and/or PUSCH(s) on at least two cells in the first cell and/or at least one second cell; and
502: the network device transmits the PDSCH(s) and/or receives the PUSCH(s) on the at least two cells.

In some embodiments, reference may be made to the embodiments of the first aspect for implementations of 501-502, with repeated parts being not going to be described herein any further.

In some embodiments, the method may further include (not shown): the network device transmits first configuration information and/or first activation/deactivation information to a terminal equipment, the first configuration information and/or the first activation/deactivation information including information indicating the first cell and/or the at least one second cell, and/or, information of at least one sub set of cells, and/or, information of a sub combination of cells in the first cell and/or the at least one second cell that are able to be scheduled by the same DCI, and reference may be made to the embodiment of the first aspect for details.

Reference may be made to the embodiments of the first aspect for a method for indicating/determining the cells scheduled by DCI, which shall not be repeated herein any further.

It can be seen from the above embodiment that scheduling PDSCHs and/or PUSCHs of multiple serving cells by one DCI may be supported, thereby alleviating DCI monitoring burden on the terminal equipment, and reducing power consumption and complexity.

### Embodiments of a third aspect

The embodiments of this disclosure provide a data transceiving apparatus. The apparatus may be, for example, a terminal equipment, or one or some components or assemblies configured in the terminal equipment. Contents in this embodiment identical to those in the embodiments of the first aspect shall not be described herein any further.

FIG. 6 is a schematic diagram of a data transceiving apparatus of the embodiments of this disclosure. As shown in FIG. 6, the data transceiving apparatus 600 includes:
a first receiving unit 601 configured to receive downlink control information (DCI) in a first cell, the DCI being used to schedule PDSCH(s) and/or PUSCH(s) on at least two cells in the first cell and/or at least one second cell; and
a transceiving unit 602 configured to receive the PDSCH(s) and/or transmit the PUSCH(s) on the at least two cells.

In some embodiments, the first cell and the at least one second cell include all or a part of cells in a primary cell group or a secondary cell group or the same PUCCH group.

In some embodiments, the first cell and the at least one second cell include cells that are able to be scheduled by the first cell, or cells that are able to be scheduled by the DCI.

In some embodiments, the first cell and/or the at least one second cell include(s) at least one sub set of cells, and cells in different sub sets of cells are unable to be scheduled by the same DCI.

In some embodiments, the DCI is a first DCI format. For example, the first DCI format only supports multi-cell scheduling.

In some embodiments, the DCI includes a first information field and/or a second information field, the first information field and/or the second information field being used to indicate the cells scheduled by the DCI.

In some embodiments, the DCI is used to simultaneously schedule the first cell and/or the at least one second cell.

In some embodiments, the first cell and/or the at least one second cell is/are predefined or configured.

In some embodiments, the DCI includes or does not include a third information field, when one or more cells to which the third information field corresponds are not scheduled, a value of the third information field is a first value, or the DCI does not include a third information field, or the terminal equipment ignores the third information field. For example, the DCI includes at least two third information fields.

In some embodiments, the DCI includes a fourth information field, the fourth information field including a first block and/or a second block. When one or more cells to which the first block or the second block corresponds are not scheduled, a value of the first block or the second block is a second value or the fourth information field does not include the first block or the second block, or the terminal equipment ignores the first block or the second block.

In some embodiments, bits included in the second block and the first block may or may not intersect.

In some embodiments, the apparatus further includes:
a second receiving unit (not shown) configured to receive first configuration information and/or first activation/deactivation information, the first configuration information and/or the first activation/deactivation information including information indicating the first cell and/or the at least one second cell, and/or, information of at least one sub set of cells, and/or, information of a sub combination of cells in the first cell and/or the at least one second cell that are able to be scheduled by the same DCI.

In some embodiments, the first configuration information includes cell configuration information of the first cell, and/or cell configuration information of the second cell, and/or configuration information of a primary cell group or a secondary cell group.

In some embodiments, the apparatus further includes (not shown):
a first determining unit configured to determine, according to the first configuration information and/or the first activation/deactivation information, a cell or a sub set of cells to which a value of an information field in the DCI corresponds or values of a part of blocks of an information field correspond.

In some embodiments, the first configuration information includes cell configuration information of the first cell and/or the second cell, the cell configuration information of the first cell and/or the second cell including first indication information, the first indication information being used to indicate one or more values of a first information field and/or one or more values of a second information field to which the first cell or the second cell corresponds.

In some embodiments, the first configuration information includes cell configuration information of the first cell and/or configuration information of a primary cell group or a secondary cell group, the cell configuration information of the first cell and/or the configuration information of the primary cell group or the secondary cell group including second indication information, the second indication information being used to indicate value(s) of the first information fields and/or one or more values of a second information field to which the first cell and/or the at least one cell correspond(s).

In some embodiments, the DCI includes a first information field, the first information field being used to indicate the at least two cells.

In some embodiments, the DCI includes a first information field, the first information field being used to indicate a cell in the at least two cells.

In some embodiments, the DCI further includes a second information field, the second information field being used to indicate a scheduled sub set of cells from one or more sub sets of cells in which the one cell is located, or being used to indicate a scheduled sub set of cells from one or more sub sets of cells associated with the one cell, or being used to indicate one or more cells other than the one cell in the cells scheduled by the DCI.

In some embodiments, the first information field includes a third block and/or a fourth block, and when one or more cells to which the third block or fourth block corresponds are not scheduled, a value of the third block or fourth block is a third value, or the fourth information field does not include a third block and/or a fourth block, or the terminal equipment ignores the third block or the fourth block.

In some embodiments, the DCI includes multiple first information fields, and when one or more cells to which one first information field correspond are not scheduled, a value of the first information field is a third value or the DCI does not include the first information field or the terminal equipment ignores the first information field.

In some embodiments, the DCI includes a first information field or a second information field, the first information field or the second information field being a bitmap, a first bit and a second bit in the bitmap corresponding to different cells or sub sets of cells.

In some embodiments, the DCI includes a first information field or a second information field, the first information field or the second information field being a resource indication value (RIV).

In some embodiments, the DCI includes a first information field or a second information field, the first information field or the second information field being used to indicate an index sub set of cells.

In some embodiments, the DCI includes a first information field and a second information field, the second information field being used to indicate an index of sub set of cells, and the first information field being used to indicate a cell scheduled by the DCI in the sub set of cells indicated by the second information field.

In some embodiments, the apparatus further includes:
a second determining unit (not shown) configured to determine one or more cells scheduled by the DCI according to a value of the second information field and/or the first information field.

In some embodiments, the apparatus further includes:
a third determining unit (not shown) configured to determine one or more cells scheduled by the DCI according to a DCI format.

In some embodiments, the apparatus further includes:
a fourth determining unit (not shown) configured to determine one or more cells scheduled by the DCI according to values of a part of blocks of the third information field and/or the fourth information field.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data transceiving apparatus 600 may further include other components or modules, and reference may be made to related techniques for particulars of these components or modules.

Furthermore, for the sake of simplicity, connection relationships between the components or modules or signal profiles thereof are only illustrated in FIG. 6. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that scheduling PDSCHs and/or PUSCHs of multiple serving cells by one DCI may be supported, thereby alleviating DCI monitoring burden on the terminal equipment, and reducing power consumption and complexity.

### Embodiments of a fourth aspect

The embodiments of this disclosure provide a data transceiving apparatus. The apparatus may be, for example, a network device, or one or some components or assemblies configured in the network device. Contents in this embodiment identical to those in the embodiment of the fourth aspect shall not be described herein any further.

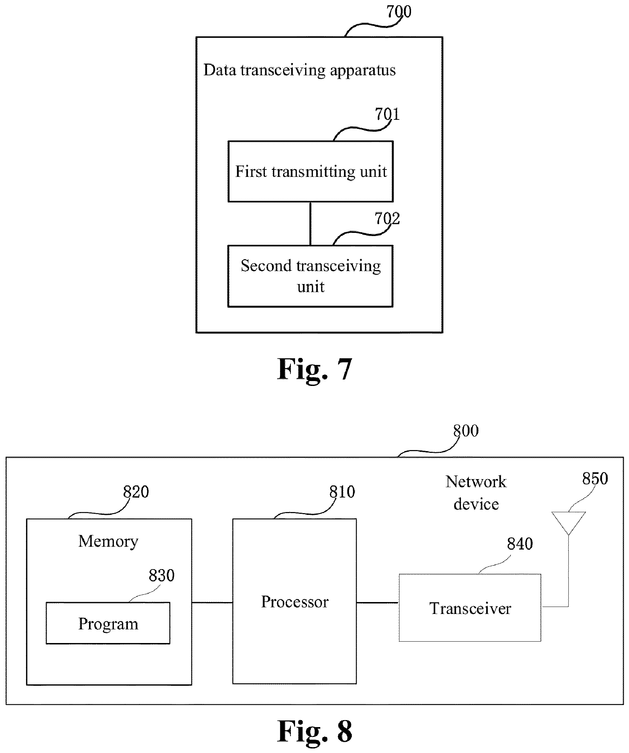

FIG. 7 is a schematic diagram of a data transceiving apparatus of the embodiments of this disclosure. As shown in FIG. 7, the data transceiving apparatus 700 includes:
a first transmitting unit 701 configured to transmit downlink control information (DCI) in a first cell, the DCI being used to schedule PDSCH(s) and/or PUSCH(s) on at least two cells in the first cell and/or at least one second cell; and
a second transceiving unit 702 configured to transmit the PDSCH(s) and/or receive the PUSCH(s) on the at least two cells.

In some embodiments, the apparatus further includes (not shown):
a second receiving unit configured to receive first configuration information and/or first activation/deactivation information, the first configuration information and/or the first activation/deactivation information including information indicating the first cell and/or the at least one second cell, and/or, information of at least one sub set of cells, and/or, information of a sub combination of cells in the first cell and/or the at least one second cell that are able to be scheduled by the same DCI.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data transceiving apparatus 700 may further include other components or modules, and reference may be made to related techniques for particulars of these components or modules.

Furthermore, for the sake of simplicity, connection relationships between the components or modules or signal profiles thereof are only illustrated in FIG. 7. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that scheduling PDSCHs and/or PUSCHs of multiple serving cells by one DCI may be supported, thereby alleviating DCI monitoring burden on the terminal equipment, and reducing power consumption and complexity.

### Embodiments of a fifth aspect

The embodiments of this disclosure provide a communication system, and reference may be made to FIG. 1, with contents identical to those in the embodiments of the first to the fourth aspects being not going to be described herein any further.

In some embodiments, the communication system 100 may at least include: a terminal equipment 102 and a network device 101.

In some embodiments, reference may be made to the terminal equipment 1500 below for implementation of the terminal equipment 102, and reference may be made to the network device 1400 for implementation of the network device 101.

The embodiments of this disclosure further provide a network device, which may be, for example, a base station. However, this disclosure is not limited thereto, and it may also be another network device.

FIG. 8 is a schematic diagram of a structure of the network device of the embodiment of this disclosure. As shown in FIG. 8, a network device 800 may include a processor 810 (such as a central processing unit (CPU)) and a memory 820, the memory 820 being coupled to the processor 810. The memory 820 may store various data, and furthermore, it may store a program 830 for information processing, and execute the program 830 under control of the processor 810.

For example, the processor 810 may be configured to execute a program to carry out the data transceiving method described in the embodiments of the second aspect.

Furthermore, as shown in FIG. 8, the network device 800 may include a transceiver 840, and an antenna 850, etc. Functions of the above components are similar to those in the related art, and shall not be described herein any further. It should be noted that the network device 800 does not necessarily include all the parts shown in FIG. 8, and furthermore, the network device 800 may include parts not shown in FIG. 8, and the related art may be referred to.

The embodiments of this disclosure further provide a terminal equipment; however, this disclosure is not limited thereto, and it may also be another equipment.

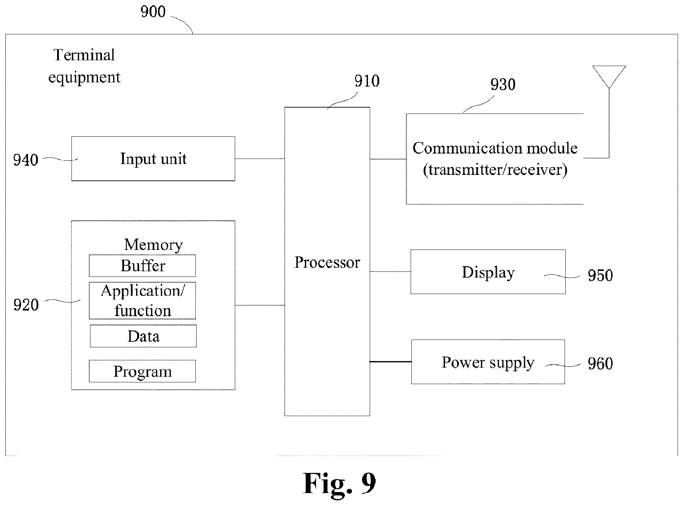

FIG. 9 is a schematic diagram of a terminal equipment of the embodiment of this disclosure. As shown in FIG. 9, a terminal equipment 900 may include a processor 910 and a memory 920, the memory 920 storing data and a program and being coupled to the processor 910. It should be noted that this figure is illustrative only, and other types of structures may also be used, so as to supplement or replace this structure and achieve a telecommunications function or other functions.

For example, the processor 910 may be configured to execute a program to carry out the data transceiving method as described in the embodiments of the first aspect.

As shown in FIG. 9, the terminal equipment 900 may further include a communication module 930, an input unit 940, a display 950, and a power supply 960; wherein functions of the above components are similar to those in the related art, which shall not be described herein any further. It should be noted that the terminal equipment 900 does not necessarily include all the parts shown in FIG. 9, and the above components are not necessary. Furthermore, the terminal equipment 900 may include parts not shown in FIG. 9, and the related art may be referred to.

Embodiments of this disclosure provide a computer readable program, which, when executed in a terminal equipment, causes the terminal equipment to carry out the data transceiving method as described in the embodiments of the first aspect.

Embodiments of this disclosure provide a computer storage medium, including a computer readable program, which causes a terminal equipment to carry out the data transceiving method as described in the embodiments of the first aspect.

Embodiments of this disclosure provide a computer readable program, which, when executed in a network device, causes the network device to carry out the data transceiving method as described in the embodiments of the second aspect.

Embodiments of this disclosure provide a computer storage medium, including a computer readable program, which causes a network device to carry out the data transceiving method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.

At a terminal equipment side
1. A data transceiving method, applicable to a terminal equipment, characterized in that the method includes:
   receiving downlink control information (DCI) by the terminal equipment in a first cell, the DCI being used to schedule PDSCH(s) and/or PUSCH(s) on at least two cells in the first cell and/or at least one second cell; and
   receiving the PDSCH(s) and/or transmitting the PUSCH(s) by the terminal equipment on the at least two cells.
2. The method according to supplement 1, wherein the first cell and the at least one second cell include all or a part of cells in a primary cell group or a secondary cell group or the same PUCCH group.
3. The method according to either one of supplements 1 and 2, wherein the first cell and the at least one second cell include cells that are able to be scheduled by the first cell, or cells that are able to be scheduled by the DCI.
4. The method according to any one of supplements 1-3, wherein the first cell and/or the at least one second cell include(s) at least one sub set of cells, and cells in different sub sets of cells are unable to be scheduled by a same DCI.
5. The method according to supplement 1, wherein the DCI is a first DCI format.
6. The method according to supplement 5, wherein the first DCI format only supports multi-cell scheduling.
7. The method according to any one of supplements 1-6, wherein the DCI includes a first information field and/or a second information field, the first information field and/or the second information field being used to indicate the cells scheduled by the DCI.
8. The method according to any one of supplements 1-7, wherein the DCI is used to simultaneously schedule the first cell and/or the at least one second cell.
9. The method according to supplement 8, wherein the first cell and/or the at least one second cell is/are predefined or configured.
10. The method according to any one of supplements 1-7, wherein the DCI includes or does not include a third information field, when one or more cells to which the third information field corresponds are not scheduled, a value of the third information field is a first value or the DCI does not include the third information field or the terminal equipment ignores the third information field.
11. The method according to supplement 10, wherein the DCI includes at least two third information fields.
12. The method according to any one of supplements 1-7, wherein the DCI includes a fourth information field, the fourth information field including a first block and/or a second block, one or more cells to which the first block or the second block corresponds are not scheduled, a value of the first block or the second block is a second value or the fourth information field does not include the first block or the second block, or the terminal equipment ignores the first block or the second block.
13. The method according to supplement 12, wherein bits included in the second block and the first block intersect or do not intersect.
14. The method according to any one of supplements 1-13, wherein the method further includes:
   receiving first configuration information and/or first activation/deactivation information by the terminal equipment, the first configuration information and/or the first activation/deactivation information including information indicating the first cell and/or the at least one second cell, and/or, information of at least one sub set of cells, and/or, information of a sub combination of cells in the first cell and/or the at least one second cell that are able to be scheduled by a same DCI.
15. The method according to supplement 14, wherein the first configuration information includes cell configuration information of the first cell, and/or cell configuration information of the second cell, and/or configuration information of a primary cell group or a secondary cell group.
16. The method according to supplement 14, wherein the method further includes:
   according to the first configuration information and/or the first activation/deactivation information, determining by the terminal equipment a cell or a sub set of cells to which a value of an information field in the DCI corresponds or values of a part of blocks of an information field correspond.
17. The method according to supplement 14, wherein the first configuration information includes cell configuration information of the first cell and/or the second cell, the cell configuration information of the first cell and/or the second cell including first indication information, the first indication information being used to indicate one or more values of a first information field and/or one or more values of a second information field to which the first cell or the second cell corresponds.
18. The method according to supplement 14, wherein the first configuration information includes cell configuration information of the first cell and/or configuration information of a primary cell group or a secondary cell group, the cell configuration information of the first cell and/or the configuration information of the primary cell group or the secondary cell group including second indication information, the second indication information being used to indicate values of the first information field and/or one or more values of a second information field to which the first cell and/or the at least one cell correspond(s).
19. The method according to supplement 7, wherein the DCI includes a first information field, the first information field being used to indicate the at least two cells.
20. The method according to supplement 7, wherein the DCI includes a first information field, the first information field being used to indicate a cell in the at least two cells.
21. The method according to supplement 20, wherein the DCI further includes a second information field, the second information field being used to indicate a scheduled sub set of cells from one or more sub sets of cells in which the one cell is located, or being used to indicate a scheduled sub set of cells from one or more sub sets of cells associated with the one cell, or being used to indicate one or more cells other than the one cell in the cells scheduled by the DCI.
22. The method according to supplement 7, wherein the first information field includes a third block and/or a fourth block, and when one or more cells to which the third block or fourth block corresponds are not scheduled, a value of the third block or fourth block is a third value, or the fourth information field does not include the third block and/or the fourth block, or the terminal equipment ignores the third block or the fourth block.
23. The method according to supplement 7, wherein the DCI includes multiple first information fields, and when one or more cells to which one first information field correspond are not scheduled, a value of the first information field is a third value or the DCI does not include the first information field or the terminal equipment ignores the first information field.
24. The method according to supplement 7, wherein the DCI includes a first information field or a second information field, the first information field or the second information field being a bitmap, a first bit and a second bit in the bitmap corresponding to different cells or sub sets of cells.
25. The method according to supplement 7, wherein the DCI includes a first information field or a second information field, the first information field or the second information field being an RIV.
26. The method according to supplement 7, wherein the DCI includes a first information field or a second information field, the first information field or the second information field being used to indicate an index of sub set of cells.
27. The method according to supplement 7, wherein the DCI includes a first information field and a second information field, the second information field being used to indicate an index of sub set of cells, and the first information field being used to indicate a cell scheduled by the DCI in the sub set of cells indicated by the second information field.
28. The method according to any one of supplements 19-27, wherein the method further includes:
   determining one or more cells scheduled by the DCI by the terminal equipment according to a value/values of the second information field and/or the first information field.
29. The method according to supplement 1 or 5 or 6, wherein the method further includes:
   determining one or more cells scheduled by the DCI by the terminal equipment according to a DCI format.
30. The method according to any one of supplements 10-13, wherein the method further includes:
   determining one or more cells scheduled by the DCI by the terminal equipment according to values of a part of blocks of the third information field and/or the fourth information field.
   At a network device side
31. A data transceiving method, applicable to a network device, characterized in that the method includes:
   transmitting downlink control information (DCI) by the network device in a first cell, the DCI being used to schedule PDSCH(s) and/or PUSCH(s) on at least two cells in the first cell and/or at least one second cell; and
   transmitting the PDSCH(s) and/or receiving the PUSCH(s) on the at least two cells by the network device.
32. A network device, including a memory and a processor, the memory storing a computer program, and the processor being configured to execute the computer program to carry out the data transceiving method as described in supplement 31.
33. A terminal equipment, including a memory and a processor, the memory storing a computer program, and the processor being configured to execute the computer program to carry out the data transceiving method as described in any one of supplements 1-30.
34. A communication system, including:
   the terminal equipment as described in supplement 33, and/or the network device as described in supplement 32.

At an apparatus side
1. A data transceiving apparatus, applicable to a terminal equipment, characterized in that the apparatus includes:
   a first receiving unit configured to receive downlink control information (DCI) in a first cell, the DCI being used to schedule PDSCH(s) and/or PUSCH(s) on at least two cells in the first cell and/or at least one second cell; and
   a transceiving unit configured to receive the PDSCH(s) and/or transmit the PUSCH(s) on the at least two cells.
2. The apparatus according to supplement 1, wherein the first cell and the at least one second cell include all or a part of cells in a primary cell group or a secondary cell group or the same PUCCH group.
3. The apparatus according to either one of supplements 1 and 2, wherein the first cell and the at least one second cell include cells that are able to be scheduled by the first cell, or cells that are able to be scheduled by the DCI.
4. The apparatus according to any one of supplements 1-3, wherein the first cell and/or the at least one second cell include(s) at least one sub set of cells, and cells in different sub sets of cells are unable to be scheduled by a same DCI.
5. The apparatus according to supplement 1, wherein the DCI is a first DCI format.
6. The apparatus according to supplement 5, wherein the first DCI format only supports multi-cell scheduling.
7. The apparatus according to any one of supplements 1-6, wherein the DCI includes a first information field and/or a second information field, the first information field and/or the second information field being used to indicate the cells scheduled by the DCI.
8. The apparatus according to any one of supplements 1-7, wherein the DCI is used to simultaneously schedule the first cell and/or the at least one second cell.
9. The apparatus according to supplement 8, wherein the first cell and/or the at least one second cell is/are predefined or configured.
10. The apparatus according to any one of supplements 1-7, wherein the DCI includes or does not include a third information field, when one or more cells to which the third information field corresponds are not scheduled, a value of the third information field is a first value or the DCI does not include the third information field or the terminal equipment ignores the third information field.
11. The apparatus according to supplement 10, wherein the DCI includes at least two third information fields.
12. The apparatus according to any one of supplements 1-7, wherein the DCI includes a fourth information field, the fourth information field including a first block and/or a second block, one or more cells to which the first block or the second block corresponds are not scheduled, a value of the first block or the second block is a second value or the fourth information field does not include the first block or the second block, or the terminal equipment ignores the first block or the second block.
13. The apparatus according to supplement 12, wherein bits included in the second block and the first block intersect or do not intersect.
14. The apparatus according to any one of supplements 1-13, wherein the apparatus further includes:
   a second receiving unit configured to receive first configuration information and/or first activation/deactivation information, the first configuration information and/or the first activation/deactivation information including information indicating the first cell and/or the at least one second cell, and/or, information of at least one sub set of cells, and/or, information of a sub combination of cells in the first cell and/or the at least one second cell that are able to be scheduled by a same DCI.
15. The apparatus according to supplement 14, wherein the first configuration information includes cell configuration information of the first cell, and/or cell configuration information of the second cell, and/or configuration information of a primary cell group or a secondary cell group.
16. The apparatus according to supplement 14, wherein the apparatus further includes:
   a first determining unit configured to, according to the first configuration information and/or the first activation/deactivation information, determine a cell or a sub set of cells to which a value of an information field in the DCI corresponds or values of a part of blocks of an information field correspond.
17. The apparatus according to supplement 14, wherein the first configuration information includes cell configuration information of the first cell and/or the second cell, the cell configuration information of the first cell and/or the second cell including first indication information, the first indication information being used to indicate one or more values of a first information field and/or one or more values of a second information field to which the first cell or the second cell corresponds.
18. The apparatus according to supplement 14, wherein the first configuration information includes cell configuration information of the first cell and/or configuration information of a primary cell group or a secondary cell group, the cell configuration information of the first cell and/or the configuration information of the primary cell group or the secondary cell group including second indication information, the second indication information being used to indicate a value of the first information field and/or one or more values of a second information field to which the first cell and/or the at least one cell correspond(s).
19. The apparatus according to supplement 7, wherein the DCI includes a first information field, the first information field being used to indicate the at least two cells.
20. The apparatus according to supplement 7, wherein the DCI includes a first information field, the first information field being used to indicate a cell in the at least two cells.
21. The apparatus according to supplement 20, wherein the DCI further includes a second information field, the second information field being used to indicate a scheduled sub set of cells from one or more sub sets of cells in which the one cell is located, or being used to indicate a scheduled sub set of cells from one or more sub sets of cells associated with the one cell, or being used to indicate one or more cells other than the one cell in the cells scheduled by the DCI.
22. The apparatus according to supplement 7, wherein the first information field includes a third block and/or a fourth block, and when one or more cells to which the third block or fourth block corresponds are not scheduled, a value of the third block or fourth block is a third value, or the fourth information field does not include the third block and/or the fourth block, or the terminal equipment ignores the third block or the fourth block.
23. The apparatus according to supplement 7, wherein the DCI includes multiple first information fields, and when one or more cells to which one first information field correspond are not scheduled, a value of the first information field is a third value or the DCI does not include the first information field or the terminal equipment ignores the first information field.
24. The apparatus according to supplement 7, wherein the DCI includes a first information field or a second information field, the first information field or the second information field being a bitmap, a first bit and a second bit in the bitmap corresponding to different cells or sub sets of cells.
25. The apparatus according to supplement 7, wherein the DCI includes a first information field or a second information field, the first information field or the second information field being an RIV.
26. The apparatus according to supplement 7, wherein the DCI includes a first information field or a second information field, the first information field or the second information field being used to indicate an index of sub set of cells.
27. The apparatus according to supplement 7, wherein the DCI includes a first information field and a second information field, the second information field being used to indicate an index of sub set of cells, and the first information field being used to indicate a cell scheduled by the DCI in the sub set of cells indicated by the second information field.
28. The apparatus according to any one of supplements 19-27, wherein the apparatus further includes:
   a second determining unit configured to determine one or more cells scheduled by the DCI according to a value/values of the second information field and/or the first information field.
29. The apparatus according to supplement 1 or 5 or 6, wherein the apparatus further includes:
   a third determining unit configured to determine one or more cells scheduled by the DCI according to a DCI format.
30. The apparatus according to any one of supplements 10-13, wherein the apparatus further includes:
   a fourth determining unit configured to determine one or more cells scheduled by the DCI according to values of a part of blocks of the third information field and/or the fourth information field.
   At a network device side
31. A data transceiving apparatus, applicable to a network device, characterized in that the apparatus includes:
   a first transmitting unit configured to transmit downlink control information (DCI) in a first cell, the DCI being used to schedule PDSCH(s) and/or PUSCH(s) on at least two cells in the first cell and/or at least one second cell; and
   a second transceiving unit configured to transmit the PDSCH(s) and/or receive the PUSCH(s) on the at least two cells.
32. The apparatus according to supplement 31, wherein the apparatus further includes:
   a second receiving unit configured to receive first configuration information and/or first activation/deactivation information, the first configuration information and/or the first activation/deactivation information including information indicating the first cell and/or the at least one second cell, and/or, information of at least one sub set of cells, and/or, information of a sub combination of cells in the first cell and/or the at least one second cell that are able to be scheduled by a same DCI.

## Claims

1. A data transceiving apparatus, applicable to a terminal equipment, **characterized in that** the apparatus comprises:
a first receiving unit configured to receive downlink control information (DCI) in a first cell, the DCI being used to schedule PDSCH(Physical Uplink Shared Channel)(s) and/or PUSCH(Physical Uplink Shared Channel)(s) on at least two cells in the first cell and/or at least one second cell; and
a transceiving unit configured to receive the PDSCH(s) and/or transmit the PUSCH(s) on the at least two cells.

2. The apparatus according to claim 1, wherein the first cell and the at least one second cell comprise all or a part of cells in a primary cell group or a secondary cell group or the same PUCCH group.

3. The apparatus according to claim 1, wherein the first cell and the at least one second cell comprise cells that are able to be scheduled by the first cell, or cells that are able to be scheduled by the DCI.

4. The apparatus according to claim 1, wherein the first cell and/or the at least one second cell comprise(s) at least one sub set of cells, and cells in different sub sets of cells are unable to be scheduled by a same DCI.

5. The apparatus according to claim 1, wherein the DCI comprises a first information field and/or a second information field, the first information field and/or the second information field being used to indicate the cells scheduled by the DCI.

6. The apparatus according to claim 1, wherein the DCI is used to simultaneously schedule the first cell and/or the at least one second cell.

7. The apparatus according to claim 1, wherein the DCI comprises or does not comprise a third information field, one or more cells to which the third information field corresponds are not scheduled, a value of the third information field is a first value or the DCI does not include the third information field or the terminal equipment ignores the third information field.

8. The apparatus according to claim 1, wherein the DCI includes a fourth information field, the fourth information field including a first block and/or a second block, one or more cells to which the first block or the second block corresponds are not scheduled, a value of the first block or the second block is a second value or the fourth information field does not include the first block or the second block, or the terminal equipment ignores the first block or the second block.

9. The apparatus according to claim 1, wherein the apparatus further comprises:
a second receiving unit configured to receive first configuration information and/or first activation/deactivation information, the first configuration information and/or the first activation/deactivation information including information indicating the first cell and/or the at least one second cell, and/or, information of the at least one sub set of cells, and/or, information of a sub combination of cells in the first cell and/or the at least one second cell that are able to be scheduled by the same DCI.

10. The apparatus according to claim 9, wherein the apparatus further comprises:
a first determining unit configured to determine, according to the first configuration information and/or the first activation/deactivation information, a cell or a sub set of cells to which a value of an information field in the DCI corresponds or values of a part of blocks of an information field correspond.

11. The apparatus according to claim 9, wherein the first configuration information comprises cell configuration information of the first cell and/or the second cell, the cell configuration information of the first cell and/or the second cell including first indication information, the first indication information being used to indicate one or more values of a first information field and/or one or more values of a second information field to which the first cell or the second cell corresponds.

12. The apparatus according to claim 9, wherein the first configuration information comprises cell configuration information of the first cell and/or configuration information of a primary cell group or a secondary cell group, the cell configuration information of the first cell and/or the configuration information of the primary cell group or the secondary cell group including second indication information, the second indication information being used to indicate a value of the first information field and/or one or more values of a second information field to which the first cell and/or the at least one cell correspond(s).

13. The apparatus according to claim 5, wherein the DCI further comprises a second information field, the second information field being used to indicate a scheduled sub set of cells from one or more sub sets of cells in which the one cell is located, or being used to indicate a scheduled sub set of cells from one or more sub sets of cells associated with the one cell, or being used to indicate one or more cells other than the cell in the one cells scheduled by the DCI.

14. The apparatus according to claim 5, wherein the DCI comprises multiple first information fields, and when one or more cells to which one first information field correspond are not scheduled, a value of the first information field is a third value or the DCI does not include the first information field or the terminal equipment ignores the first information field.

15. The apparatus according to claim 5, wherein the DCI comprises a first information field or a second information field, the first information field or the second information field being a bitmap, a first bit and a second bit in the bitmap corresponding to different cells or sub sets of cells.

16. The apparatus according to claim 5, wherein the DCI comprises a first information field or a second information field, the first information field or the second information field being an RIV(Resource Indicator Value).

17. The apparatus according to claim 5, wherein the DCI comprises a first information field or a second information field, the first information field or the second information field being used to indicate an index sub set of cells.

18. The apparatus according to claim 5, wherein the DCI comprises a first information field and a second information field, the second information field being used to indicate an index sub set of cells, and the first information field being used to indicate a cell scheduled by the DCI in the sub set of cells indicated by the second information field.

19. A data transceiving apparatus, applicable to a network device, **characterized in that** the apparatus comprises:
a first transmitting unit configured to transmit downlink control information (DCI) in a first cell, the DCI being used to schedule PDSCH(s) and/or PUSCH(s) on at least two cells in the first cell and/or at least one second cell; and
a second transceiving unit configured to transmit the PDSCH(s) and/or receive the PUSCH(s) on the at least two cells.

20. A communication system, comprising a terminal equipment and/or a network device, the terminal equipment comprising the data transceiving apparatus as claimed in any one of claims 1-18, and the network device comprising the data transceiving apparatus as claimed in any one of claim 19.
